# EUROPÄISCHE PATENTSCHRIFT

(11) **EP 2 979 008 B1**
(45) Veröffentlichungstag und Bekanntmachung des Hinweises auf die Patenterteilung: **05.02.2020**
(21) Anmeldenummer: 14728618.1
(22) Anmeldetag: 20.03.2014
(51) Int. Cl.: F16H 61/00, F16H 59/14

(54) **GETRIEBESTEUERKREIS**
TRANSMISSION CONTROL CIRCUIT
CIRCUIT DE COMMANDE DE TRANSMISSION

(30) Priorität: 26.03.2013 DE 102013205358
(43) Veröffentlichungstag der Anmeldung: 03.02.2016
(73) Patentinhaber: Deere & Company, Moline, IL 61265 (US)
(72) Erfinder: FRASSEK, Steffen, 68163 Mannheim (DE); RHEINHEIMER, Günter, 67157 Wachenheim (DE); SCHÄFER, Helmut, 68775 Ketsch (DE)
(74) Vertreter: Dehnhardt, Florian Christopher
(86) Internationale Anmeldenummer: PCT/IB2014/000562
(87) Internationale Veröffentlichungsnummer: WO 2014/155195

(56) Entgegenhaltungen:
- US-B1- 6 470 247

## Beschreibung

Die Erfindung betrifft einen Getriebesteuerkreis zur Steuerung eines durch eine Druckpumpe bereitgestellten Systemdrucks in einem Getriebe einer Arbeitsmaschine, mit einem Druckregelventil zur Einstellung des bereitgestellten Systemdrucks auf einen maximalen Systemdruck, einer elektronischen Steuereinheit und einem Druckbegrenzungsventil, das durch die Steuereinheit ansteuerbar ist, sowie ein mit dem Getriebesteuerkreis in Zusammenhang stehendes Verfahren und eine Arbeitsmaschine.

Derzeitige Getriebesteuerkreise zur Steuerung eines Systemdrucks in einem Getriebe regeln den Systemdruck auf ein vorgegebenes konstantes Druckniveau ein. Dieses Druckniveau wird ausreichend hoch gewählt, dass die hydraulisch betätigten Kupplungen und Bremsen innerhalb des Getriebes auch unter hoher Last schlupffrei Drehmoment übertragen können. Mit dieser Auslegung erreicht man einerseits eine hohe Reserve bei der Drehmomentübertragungsfähigkeit, nimmt aber in Kauf, dass die Druckpumpe andauernd das hohe Druckniveau bereitstellt, auch wenn dieses zeitweise zur sicheren Übertragung von Drehmoment nicht erforderlich wäre. Unter Effizienz- und Verbrauchsgesichtspunkten wäre es wünschenswert, die Druckpumpe gezielt dann zu entlasten, wenn zur sicheren Übertragung von Drehmomenten ein verringerter Systemdruck ausreichend wäre. Insbesondere wäre es wünschenswert einen verringerten Systemdruck variabel an momentan vorliegende Einsatzbedingungen der Arbeitsmaschine anzupassen.

US 6,470,247B1 zeigt ein System und ein Verfahren, um ein hydraulisches Fahrzeugsystem zu überwachen. Das System weist eine Mehrzahl von hydraulischen Funktionselementen auf, eine Hydraulikpumpe und eine elektronische Steuereinheit zur Steuerung der Steuerventile.

Die Aufgabe der vorliegenden Erfindung besteht darin, einen Getriebesteuerkreis zur variablen Steuerung eines Systemdrucks in einem Getriebe sowie ein entsprechendes Verfahren bereitzustellen.

Die Aufgabe wird gelöst durch einen Getriebesteuerkreis nach Anspruch 1 und ein Verfahren nach Anspruch 5.

Hierbei ist der Getriebesteuerkreis
zur Steuerung eines durch eine Druckpumpe bereitgestellten Systemdrucks in einem Getriebe einer Arbeitsmaschine, ausgestattet mit einem Druckregelventil zur Einstellung des bereitgestellten Systemdrucks auf einen maximalen Systemdruck p₀, einer elektronischen Steuereinheit, mittels der Lastzustände und Betriebszustände der Arbeitsmaschine erfassbar sind und in der den Lastzuständen zugeordnete Getriebeeingangsgrenzmomente L_{1,2, ...n} und zumindest einen ersten Betriebszustand repräsentierende Zustandswerte und zumindest einen zweiten Betriebszustand repräsentierende Zustandswerte abgelegt sind, wobei der erste Betriebszustand mit dem maximalen Systemdruck p₀ und der zweite Betriebszustand mit einem gegenüber dem maximalen Systemdruck p₀ verringerten Systemdruck p_{1, 2, ...n} assoziiert ist, und mit einem Druckbegrenzungsventil, das durch die Steuereinheit zur Übersteuerung des Druckregelventil ansteuerbar ist, um den verringerten Systemdruck p_{1, 2, ...n} variabel einzustellen, wobei eine Ansteuerung des Druckbegrenzungsventils in Abhängigkeit eines Vergleichs eines erfassten Lastzustandes mit einem Getriebeeingangsgrenzmoment L_{1,2, ...n} bei gleichzeitigem Vorliegen eines zweiten Betriebszustandes erfolgt.

Erfindungsgemäß wird unterschieden zwischen Lastzustand und Betriebszustand. Bei einem Lastzustand handelt es sich um einen Zustand, in dem über das Getriebe der Arbeitsmaschine ein Drehmoment übertragen wird. Bei einem Betriebszustand handelt es sich um einen Schaltzustand, in dem zwar kein Drehmoment über das Getriebe übertragen werden muss, aber übertragen werden kann, und in dem die Arbeitsmaschine oder Teile von ihr sich in einem bestimmten "geschalteten" Zustand befinden, z.B. Vierrad-Antriebsmodus, zugeschaltete Differentialsperre, Leerlauf. Erfindungsgemäß ist weiterhin vorgesehen, dass bei Betriebszuständen zwischen ersten Betriebszuständen und zweiten Betriebszuständen unterschieden wird. Hierbei wird nach Erkennen eines ersten Betriebszustandes unabhängig von dem aktuell anliegenden Lastzustand die Einstellung des maximalen Systemdrucks erzwungen. Wird hingegen ein zweiter Betriebszustand erkannt, wird abhängig von dem aktuell anliegenden Lastzustand der maximale Systemdruck oder ein verringerter Systemdruck eingestellt. Grundsätzlich wird erfindungsgemäß davon ausgegangen, dass eine nicht erfolgende Ansteuerung des Druckbegrenzungsventils zu keiner Übersteuerung des Druckregelventils führt, so dass der maximale Systemdruck eingestellt wird. Eine Ansteuerung des Druckbegrenzungsventils führt hingegen systembedingt zu einer Übersteuerung des Druckregelventils, so dass ein gegenüber dem maximalen Systemdruck verringerter Systemdruck eingestellt wird.

Der Vorteil des erfindungsgemäßen Getriebesteuerkreises besteht in der Reduzierung der erforderlichen Antriebsleistung für die Druckpumpe. Die Antriebsleistung für die Druckpumpe kann als parasitäre Last verstanden werden. Indem das Druckregelventil übersteuerbar ist, kann der Systemdruck an eine aktuell vorliegende Anforderung an den Systemdruck innerhalb des Getriebes in einem bestimmten Last- und Betriebszustand angepasst werden. Diese Anforderung an den Systemdruck lässt sich als Drehmomentübertragungsfähigkeit einer Lastschaltkupplung beschreiben. Betrachtet man nun das gesamte Getriebe, so ergibt sich eine bestimmte Anzahl von Lastpfaden, wobei jeder dieser Lastpfade über mehrere Lastschaltkupplungen verlaufen kann. Die Drehmomentübertragungsfähigkeit jedes Lastpfades wird somit bestimmt durch die Kupplung mit der geringsten Drehmomentübertragungsfähigkeit. Aus diesen Lastpfaden mit ihrer jeweiligen Drehmomentübertragungsfähigkeit ergeben sich Getriebeeingangsgrenzmomente, denen ihrerseits wiederum diskrete Systemdrücke zugeordnet werden können, wobei erfindungsgemäß davon ausgegangen wird, dass dem Lastpfad mit der höchsten erforderlichen Drehmomentübertragungsfähigkeit, dass heißt dem höchsten Getriebeeingangsgrenzmoment, der durch das Druckregelventil eingestellte maximale Systemdruck zugeordnet wird.

Erfindungsgemäß kann durch die proportionale Übersteuerung des Druckregelventils durch das Druckbegrenzungsventil eine beliebige Anzahl unterschiedlicher Systemdrücke unterhalb des maximalen Systemdrucks variabel eingestellt werden. Bevorzugt werden vorliegend Systemdrücke auf vier Druckniveaus unterhalb des maximalen Systemdrucks bereitgestellt.

Bevorzugt erfasst die Steuereinheit einen Lastzustand anhand eines ermittelten Getriebeeingangsmoments Mₜᵣₐₙₛ, so dass eine elektronische Ansteuerung des Druckbegrenzungsventils in Abhängigkeit des Verhältnisses des ermittelten Getriebeeingangsmoments Mₜᵣₐₙₛ zu dem Getriebeeingangsgrenzmoment L_{1,2, ...n} erfolgt. Von Vorteil ist hierbei, dass das Getriebeeingangsmoment in einfacher Weise unmittelbar sensiert oder mittelbar aus anderen zur Verfügung stehenden Werten ermittelt werden kann.

Bevorzugt erfolgt die elektronische Ansteuerung des Druckbegrenzungsventils zur Einstellung des verringerten Systemdrucks p_{1, 2, ...n}, wenn das ermittelte Getriebeeingangsmoment Mₜᵣₐₙₛ unterhalb des Getriebeeingangsgrenzmoments L_{1,2, ...n} liegt. Hierdurch ist ein einfaches Steuerungskriterium für eine Einstellung des verringerten Systemdrucks gegeben.

Bevorzugt erfolgt die elektronische Ansteuerung des Druckbegrenzungsventils zur Erhöhung des verringerten Systemdrucks p_{1, 2, ...n}, wenn das gemessene Getriebeeingangsmoment Mₜᵣₐₙₛ oberhalb des Getriebeeingangsgrenzmoments L_{1,2, ...n} liegt. Hierdurch ist ebenfalls ein einfaches Steuerungskriterium für eine Einstellung des verringerten Systemdrucks gegeben.

Bevorzugt wird eine Erhöhung des verringerten Systemdrucks p_{1, 2, ...n} bei Vorliegen eines entsprechenden Steuerkriteriums unmittelbar ohne zeitliche Verzögerung ausgeführt, wohingegen bei Vorliegen eines entsprechenden Steuerkriteriums zur Einstellung des verringerten Systemdrucks p_{1, 2, ...n} das entsprechende Getriebeeingangsgrenzmoment mit einem Hysteresefaktor hₓ < 1 multipliziert wird. Zusätzlich kann vorgesehen sein, dass dieses modifizierte Getriebeeingangsgrenzmoment zumindest für einen definierten Zeitraum t unterlaufen wird. Der Vorteil dieser Ansteuerung liegt in der Vermeidung von Druckschwankungen.

Bevorzugt wird das Getriebeeingangsmoment Mₜᵣₐₙₛ auf Basis eines Antriebsmoments M_{eng} eines Antriebsaggregats der Arbeitsmaschine ermittelt wird. Von Vorteil ist hierbei, dass es sich bei dem Antriebsmoments M_{eng} des Antriebsaggregats bereits um eine der Steuereinheit bekannte Kenngröße handelt.

Bevorzugt werden zur Ermittlung des Getriebeeingangsmoments Mₜᵣₐₙₛ von dem Antriebsmoments M_{eng} parasitäre Lasten in Anzug gebracht. Dies ermöglicht eine möglichst genaue Ermittlung des Getriebeeingangsmoments Mₜᵣₐₙₛ.

In konkreter Ausgestaltung stellt das Druckbegrenzungsventil den verringerten Systemdruck ein, indem es eine Federkraft einer Feder-Kolben-Einheit des Druckregelventils manipuliert. Von Vorteil ist hierbei, dass das Druckregelventil einerseits in seinem grundsätzlichen Aufbau beibehalten werden kann und andererseits sowohl für die Einstellung des maximalen Systemdrucks als auch des verringerten Systemdrucks zuständig ist.

In weiterhin konkreter Ausgestaltung ist durch die Manipulation der Federkraft der Feder-Kolben-Einheit des Druckregelventils ein Entlastungspunkt des bereitgestellten Systemdrucks in einem Kühlkreislauf einstellbar. Von Vorteil ist hierbei, dass die bestehende Konfiguration der Hydraulik an dieser Stelle nicht verändert werden muss, da lediglich der bestehende Entlastungspunkt des Druckregelventils durch die Übersteuerung des Druckbegrenzungsventils einstellbar gemacht wurde.

Bevorzugt ist der erste Betriebszustand durch eine in einem eingeschalteten Zustand befindliche Differentialsperre oder einen Zustand erhöhten Schlupfes innerhalb des Getriebes charakterisiert. Durch diese Gruppierung ist die Steuereinheit in der Lage zu entscheiden, ob der maximale Systemdruck erforderlich ist oder der verringerte Systemdruck ausreichend ist.

Bevorzugt ist der zweite Betriebszustand durch einen lastfreien Leerlaufzustand oder eine in einem ausgeschalteten Zustand befindliche Differentialsperre oder Zapfwelle der Arbeitsmaschine charakterisiert. Durch diese Gruppierung ist die Steuereinheit in der Lage zu entscheiden, ob der maximale Systemdruck erforderlich ist oder der verringerte Systemdruck ausreichend ist.

Bevorzugt bleibt während eines Schaltvorganges des Getriebes eine bestehende Ansteuerung des Druckbegrenzungsventils durch die Steuereinheit unverändert. Mit Schaltvorgang ist hier das Schalten von einem Gang in einen anderen Gang gemeint. Hier kann in vorteilhafter Weise ein unerwünschter Einfluss auf die Modulation während des Schalt- beziehungsweise Kupplungsvorgangs vermieden werden.

Bevorzugt wird bei konkurrierenden Ansteuersignalen durch die Steuereinheit für das Druckbegrenzungsventils, das einem höheren Systemdruck entsprechende Signal priorisiert.

Der erfindungsgemäße Getriebesteuerkreis wird anhand der nachfolgenden Figuren beschrieben. Hierin zeigen
- Figur 1: eine schematische Darstellung einer landwirtschaftlichen Arbeitsmaschine mit einem erfindungsgemäßen Getriebesteuerkreis;
- Figur 2: ein Schemadiagramm des Getriebesteuerkreises gemäß der Erfindung;
- Figur 3: eine Darstellung von Niveaus der verringerten Systemdrücke unterhalb des maximalen Systemdrucks und
- Figur 4: ein Ablaufdiagramm zur Ermittlung des Getriebeeingangsmoments.

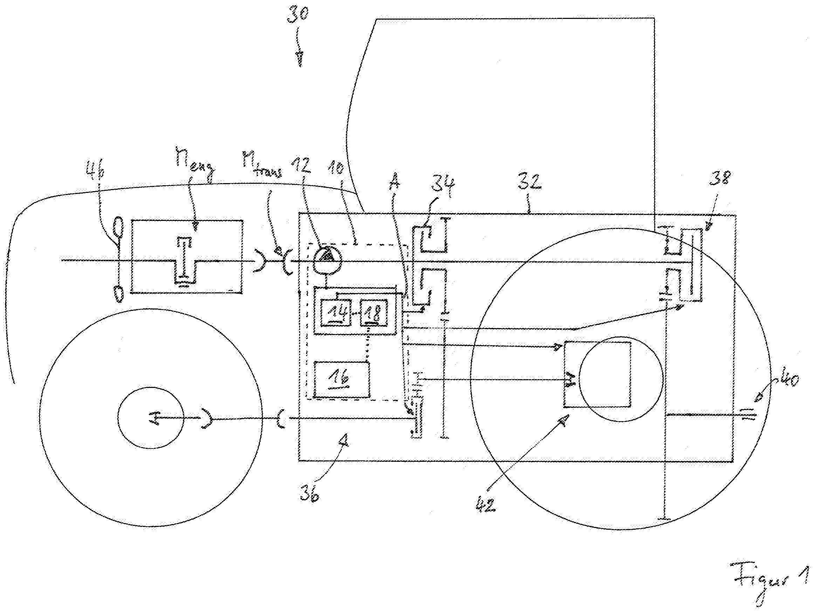

Die Figur 1 zeigt in schematischer Darstellung eine landwirtschaftliche Arbeitsmaschine 30 in Gestalt eines Schleppers mit einem erfindungsgemäßen Getriebesteuerkreis 10 für ein Getriebe 32. Bei dem Getriebe 32 kann es sich um ein Lastschaltgetriebe oder ein leistungsverzweigtes Getriebe handeln. Das Getriebe 32 enthält einen Abtrieb 36 für einen bedarfsweise zuschaltbaren Vorderradantrieb und mehrere Lastschaltkupplungen 34, von denen eine exemplarisch dargestellt ist, um verschiedene Übersetzungsverhältnisse des Schaltgetriebes einzurücken oder auszurücken. Ferner enthält das Getriebe 32 eine Zapfwellenkupplung 38 zum Antrieb einer Zapfwelle 40 und ein Differentialgetriebe 42 mit einer Differentialsperre. Als Antriebsaggregat 44 ist für den Schlepper 30 eine Verbrennungskraftmaschine vorgesehen. Optional kann eine nicht dargestellte Frontzapfwelle vorgesehen sein. Die Verbrennungskraftmaschine 44 erzeugt ein Antriebsmoments M_{eng}. Hierüber werden Nebenaggregate wie zumindest ein Kühlmittellüfter 46 angetrieben. Der Kühlmittellüfter steht hier exemplarisch für weitere Nebenaggregate, welche im Rahmen der Beschreibung dieser Erfindung als parasitäre Lasten bezeichnet werden. Das Antriebsmoment M_{eng} kommt nach Abzug der parasitären Lasten für den Antrieb der Nebenaggregate als Getriebeeingangsmoments Mₜᵣₐₙₛ am Eingang des Getriebes 32 an.

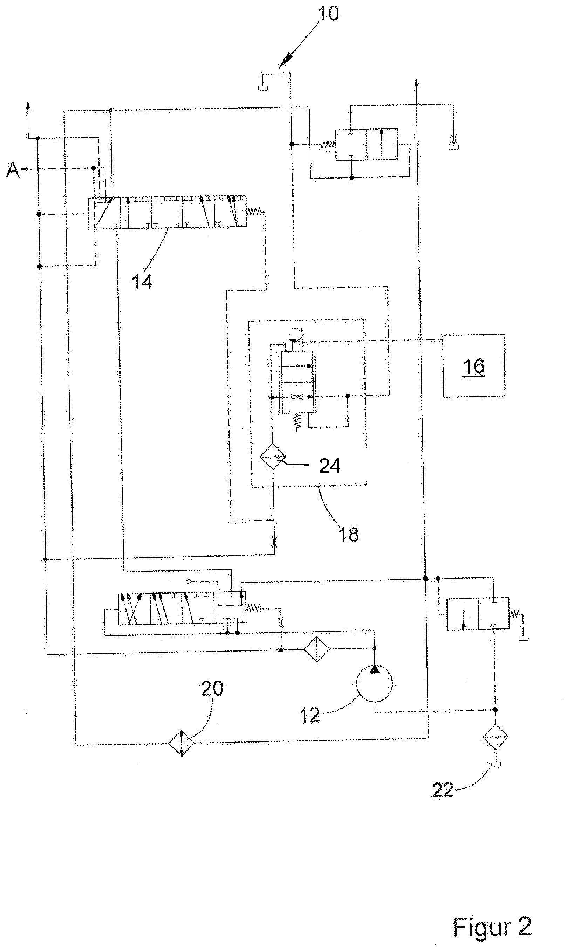

Zur Betätigung der Lastschaltkupplungen 34 sind mehrere im wesentliche gleiche Ventileinheiten vorgesehen, die ebenfalls nicht dargestellt sind. Versorgt werden diese Ventileinheiten zur Betätigung der Lastschaltkupplungen 34 mit einem Systemdruck über den in Figur 1 und Figur 2 mit A bezeichneten Hydraulikkreislauf. Der erfindungsgemäße Getriebesteuerkreis 10 dient dazu, für den Hydraulikkreislauf A einen Systemdruck einzustellen.

Der Getriebesteuerkreis 10 weist eine Druckpumpe 12 in Form einer Getriebeölpumpe, ein Druckregelventil 14, eine Steuereinheit 16, ein Druckbegrenzungsventil 18, einen Ölkühler 20, ein Ölreservoir 22 und einen Ölfilter 24 auf, wie in der Figur 2 zu erkennen. Wie dem einschlägigen Fachmann hinlänglich bekannt, sind weitere Bauteile wie verschiedene Entlastungsventile, Bypass-Ventile, Drosseln und Filter vorgesehen, die keiner besonderen Erwähnung bedürfen.

Der durch die Ölpumpe 12 bereitgestellte Systemdruck wird zunächst durch das Druckregelventil 14 auf einen maximalen Systemdruck p₀ im Hydraulikkreislauf A eingestellt. In diesem Fall ist das als Magnetventil ausgeführte Druckbegrenzungsventil 18 stromlos beziehungsweise wird nicht von der Steuereinheit 16 angesteuert. Abhängig von den zuvor bereits beschriebenen Last- und Betriebszuständen, welche durch die Steuereinheit 16 erfasst werden, kann nun eine Ansteuerung des Druckbegrenzungsventils 18 durch die Steuereinheit 16 erfolgen, wodurch das Druckbegrenzungsventil 18 das Druckregelventil 14 übersteuert. Diese Übersteuerung erfolgt, indem das Druckbegrenzungsventil 18 die auf die Kolben-Feder-Einheit des Druckregelventils 14 wirkende Abstützkraft variiert. Hierüber kann das Kräftegleichgewicht zwischen dem aktuell auf den Kolben einwirkenden Systemdruck und der auf den Kolben einwirkenden Federkraft eingestellt werden. Das Kräftegleichgewicht entspricht dem Entlastungspunkt, ab welchem der Systemdruck in den Kühlkreislauf entlastet wird.

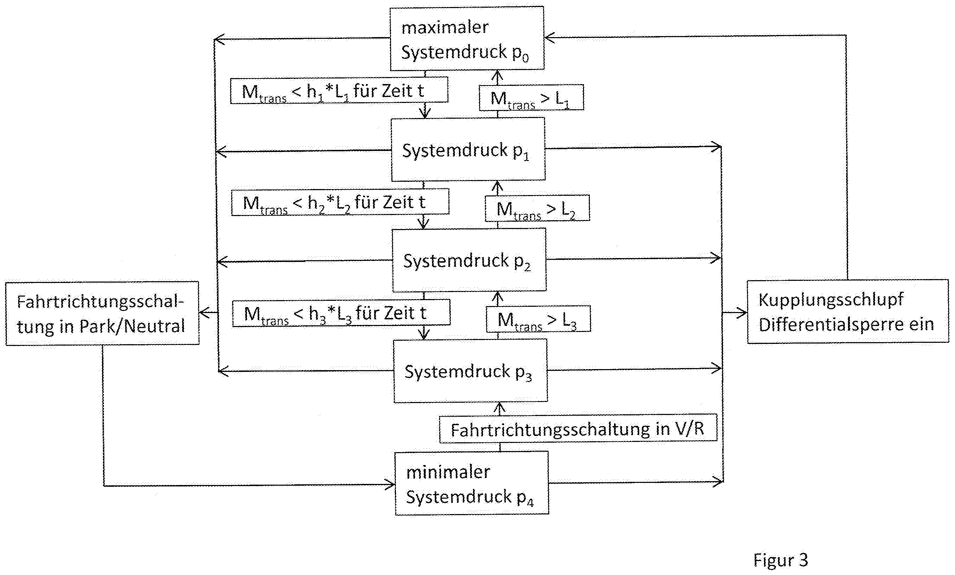

In Figur 3 sind insgesamt fünf diskrete Niveaus der Systemdrücke dargestellt, wobei das oberste Niveau durch den maximalen Systemdruck p₀ gebildet wird, während das unterste Niveau durch einen minimalen Systemdruck p₄ gebildet wird. Der maximale Systemdruck p₀ entspricht dem Druck bei nicht angesteuertem Druckbegrenzungsventil 18, dass heißt wenn dieses das Druckregelventil 14 nicht ansteuert. Der minimale Systemdruck p₄ entspricht dem Druck, der sich bei maximaler Übersteuerung des Druckregelventils 14 durch das Druckbegrenzungsventil 18 infolge des Schmier- und Kühlergegendrucks ergibt.

In Figur 3 sind auf der linken Seite zu jeweils niedrigeren Systemdrücken nach unten zeigende Pfeile und auf der rechten Seite nach oben zu jeweils höheren Systemdrücken zeigende Pfeile dargestellt. Erkennt die Steuereinheit 16, dass von irgendeinem aktuell anliegenden Systemdruck p₀, p₁, p₂, p₃, p₄ die Fahrtrichtungsschaltung in die Stellungen "Park" oder "Neutral" überführt wird, wird der minimale Systemdruck p₄ eingestellt. Erkennt die Steuereinheit 16, dass das Getriebeeingangsmoment Mₜᵣₐₙₛ für einen definierten Zeitraum t kleiner ist als eines der mit einem Hysteresefaktor h₁, h₂, h₃ multiplizierten Getriebeeingangsgrenzmomente L₁, L₂, L₃, wird der dem jeweiligen Getriebeeingangsgrenzmoment L₁, L₂, L₃ entsprechende verringerte Systemdruck p₁, p₂, p₃ eingestellt. Erkennt die Steuereinheit 16, dass von dem minimale Systemdruck p₄ aus die Fahrtrichtungsschaltung in die Stellungen "Vorwärts" oder "Rückwärts" überführt wird, wird der nächsthöhere verringerte Systemdruck p₄ eingestellt. Erkennt die Steuereinheit 16, ausgehend von irgendeinem verringerte Systemdruck p₁, p₂, p₃, p₄, dass in einer der geschalteten Lastschaltkupplungen in dem Getriebe Schlupf auftritt oder die Differentialsperre hinzugeschaltet wird, wird der maximale Systemdruck p₀ eingestellt. Jegliches Einstellen eines Systemdruck unterhalb des maximalen Systemdrucks p₀ erfolgt durch entsprechende Ansteuerung des Druckbegrenzungsventils 18 durch die Steuereinheit 16.

Grundsätzlich kann vorgesehen sein, dass ein verringerter Systemdruck p₁, p₂, p₃, p₄ unterhalb des maximalen Systemdrucks p₀ nur dann eingestellt wird, wenn ein Drehzahlsensor der Verbrennungskraftmaschine 44 eine Drehzahl sensiert, die oberhalb einer Grenzdrehzahl liegt, beispielsweise 50 Umdrehungen pro Minute, und wenn gleichzeitig ein Temperatursensor des Getriebes 32 eine Öltemperatur sensiert, die oberhalb einer Grenztemperatur liegt, beispielsweise 40°C. Durch letzteres Kriterium wird eine schnelle Erwärmung des Getriebeöls sichergestellt.

Desweiteren ist eine kontinuierliche Drucküberwachung vorgesehen, mittels der der durch die Steuereinheit 16 angesteuerte Systemdruck, dass heißt der Soll-Systemdruck, mit dem tatsächlich vorhandenen Systemdruck, dass heißt dem Ist-Systemdruck, verglichen wird.

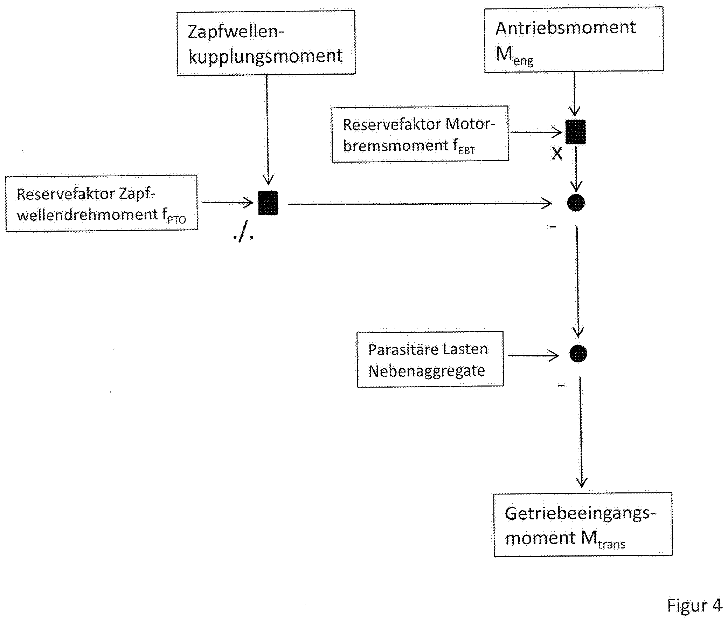

In Figur 4 ist der Ablauf beziehungsweise das Vorgehen zu der Berechnung des Getriebeeingangsmoments Mₜᵣₐₙₛ dargestellt. Das Getriebeeingangsmoment Mₜᵣₐₙₛ wird auf Basis des Antriebsmoments M_{eng} des Antriebsaggregats 44 der Arbeitsmaschine 30 berechnet. Das Antriebsmoment M_{eng} entspricht dem Drehmoment am Kurbelwellenabtrieb des Antriebsaggregats im Falle einer Verbrennungskraftmaschine beziehungsweise am Rotorabtrieb im Falle einer elektrischen Maschine. Es ist zu erkennen, dass von dem Antriebsmoment M_{eng} das Zapfwellenkupplungsmoment und parasitäre Lasten wie beispielsweise Antriebsmomente für die Nebenaggregate abgezogen werden. Grundsätzlich lässt sich die Genauigkeit der Berechnung des Getriebeeingangsmoments Mₜᵣₐₙₛ steigern, indem eine möglichst genaue Ermittlung und Berechnung der parasitären Lasten erfolgt. Das Antriebsmoment M_{eng} wird zunächst mit einem Reservefaktor f_{EBT} für das Motorbremsmoment multipliziert. Hiervon werden sowohl das durch einen Reservefaktor f_{PTO} für das Zapfwellendrehmoment geteilte Zapfwellenkupplungsmoment als auch die parasitären Lasten abgezogen, um das Getriebeeingangsmoment Mₜᵣₐₙₛ zu erhalten.

### Bezugszeichenliste

- 10: Getriebesteuerkreis
- 12: Druckpumpe
- 14: Druckregelventil
- 16: Steuereinheit
- 18: Druckbegrenzungsventil
- 20: Ölkühler
- 22: Ölreservoir
- 24: Ölfilter
- 30: Arbeitsmaschine
- 32: Getriebe
- 34: Lastschaltkupplungen
- 36: Abtrieb
- 38: Zapfwellenkupplung
- 40: Zapfwelle
- 42: Differentialgetriebe
- 44: Antriebsaggregat
- 46: Kühlmittellüfter

- A: Hydraulikkreislauf

## Patentansprüche

1. Getriebesteuerkreis (10) zur Steuerung eines durch eine Druckpumpe (12) bereitgestellten Systemdrucks in einem Getriebe einer Arbeitsmaschine (32), umfassend ein Druckregelventil (14) zur Einstellung des bereitgestellten Systemdrucks auf einen maximalen Systemdruck (p₀),
**dadurch gekennzeichnet, dass** der Getriebesteuerkreis (10) weiterhin umfasst
eine elektronische Steuereinheit (16), mittels der Lastzustände und Betriebszustände der Arbeitsmaschine (32) erfassbar sind und in der den Lastzuständen zugeordnete Getriebeeingangsgrenzmomente (L_{1,2, ...n}) und zumindest einen ersten Betriebszustand repräsentierende Zustandswerte und zumindest einen zweiten Betriebszustand repräsentierende Zustandswerte abgelegt sind, wobei der erste Betriebszustand mit dem maximalen Systemdruck (p₀) und der zweite Betriebszustand mit einem gegenüber dem maximalen Systemdruck (p₀) verringerten Systemdruck (p_{1, 2, ...n}) assoziiert ist, und ein Druckbegrenzungsventil (18), das durch die Steuereinheit (16) zur Übersteuerung des Druckregelventil (14) ansteuerbar ist, um den verringerten Systemdruck (p_{1, 2, ...n}) variabel einzustellen,
wobei eine Ansteuerung des Druckbegrenzungsventils (18) in Abhängigkeit eines Vergleichs eines erfassten Lastzustandes mit einem Getriebeeingangsgrenzmoment (L_{1,2, ...n}) bei gleichzeitigem Vorliegen eines zweiten Betriebszustandes erfolgt.

2. Getriebesteuerkreis (10) nach Anspruch 1, wobei die Steuereinheit (16) einen Lastzustand anhand eines ermittelten Getriebeeingangsmoments (Mₜᵣₐₙₛ) erfasst und eine elektronische Ansteuerung des Druckbegrenzungsventils (18) in Abhängigkeit des Verhältnisses des ermittelten Getriebeeingangsmoments (Mₜᵣₐₙₛ) zu dem Getriebeeingangsgrenzmoment (L_{1,2, ...n}) erfolgt.

3. Getriebesteuerkreis (10) nach einem der Ansprüche 1 und 2, wobei das Druckbegrenzungsventil (18) derart ausgelegt ist, dass es den verringerten Systemdruck einstellt, indem es eine Federkraft einer Feder-Kolben-Einheit des Druckregelventils (14) manipuliert.

4. Getriebesteuerkreis (10) nach Anspruch 3, wobei die Feder-Kolben-Einheit des Druckregelventils (14) derart ausgelegt ist, dass durch die Manipulation der Federkraft der ein Entlastungspunkt des bereitgestellten Systemdrucks in einem Kühlkreislauf einstellbar ist.

5. Verfahren zur Steuerung eines Getriebesteuerkreises (10) nach einem der Ansprüche 1 bis 4., wobei die elektronische Ansteuerung des Druckbegrenzungsventils (18) zur Einstellung des verringerten Systemdrucks (p_{1, 2, ...n}) erfolgt, wenn das ermittelte Getriebeeingangsmoment (Mₜᵣₐₙₛ) unterhalb des Getriebeeingangsgrenzmoments (L_{1,2, ...n}) liegt.

6. Verfahren nach Anspruch 5, wobei die elektronische Ansteuerung des Druckbegrenzungsventils (18) zur Erhöhung des verringerten Systemdrucks (p_{1, 2, ...n}) erfolgt, wenn das ermittelte Getriebeeingangsmoment (Mₜᵣₐₙₛ) oberhalb des Getriebeeingangsgrenzmoments (L_{1,2, ...n}) liegt.

7. Verfahren nach einem der Ansprüche 5 bis 6, wobei das Getriebeeingangsmoment (Mₜᵣₐₙₛ) auf Basis eines Antriebsmoments (M_{eng}) eines Antriebsaggregats der Arbeitsmaschine ermittelt wird.

8. Verfahren nach Anspruch 7, wobei zur Ermittlung des Getriebeeingangsmoments (Mₜᵣₐₙₛ) von dem Antriebsmoments (M_{eng}) parasitäre Lasten in Anzug gebracht werden.

9. Verfahren nach einem der Ansprüche 5 bis 8, wobei der erste Betriebszustand durch eine in einem eingeschalteten Zustand befindliche Differentialsperre der Arbeitsmaschine oder einen Zustand erhöhten Schlupfes innerhalb des Getriebes charakterisiert ist.

10. Verfahren nach einem der Ansprüche 5 bis 8, wobei der zweite Betriebszustand durch einen lastfreien Leerlaufzustand oder eine in einem ausgeschalteten Zustand befindliche Differentialsperre oder Zapfwelle der Arbeitsmaschine charakterisiert ist.

11. Verfahren nach einem der Ansprüche 5 bis 10, wobei während eines Schaltvorganges des Getriebes eine bestehende Ansteuerung des Druckbegrenzungsventils (18) durch die Steuereinheit (16) unverändert bleibt.

12. Verfahren nach einem der Ansprüche 5 bis 11, wobei bei konkurrierenden Ansteuersignalen durch die Steuereinheit (16) für das Druckbegrenzungsventil (18) das einem höheren Systemdruck entsprechende Signal priorisiert wird.

13. Verfahren nach einem der Ansprüche 5 bis 12, wobei bei einem durch die Steuereinheit (16) erkannten Fehler im Getriebesteuerkreis (10) der maximale Systemdruck eingestellt wird.

14. Verfahren nach einem der Ansprüche 5 bis 13, wobei eine Erhöhung des verringerten Systemdrucks (p_{1, 2, ...n}) bei Vorliegen eines entsprechenden Steuerkriteriums unmittelbar ohne zeitliche Verzögerung ausgeführt wird, wohingegen bei Vorliegen eines entsprechenden Steuerkriteriums zur Einstellung des verringerten Systemdrucks (p_{1, 2, ...n}) das entsprechende Getriebeeingangsgrenzmoment (L_{1,2, ...n}) mit einem Hysteresefaktor hₓ < 1 multipliziert wird.

15. Verfahren nach Anspruch 14, dass bei Vorliegen eines entsprechenden Steuerkriteriums zur Einstellung des verringerten Systemdrucks (p_{1, 2, ...n}) das entsprechende Getriebeeingangsgrenzmoment (L_{1, 2, ...n}) zusätzlich mit einer Zeitverzögerung t eingestellt wird.

16. Arbeitsmaschine (30) mit einem Antriebsaggregat (44) und einem Getriebe (32) mit einer Druckpumpe (12) zur Bereitstellung eines Systemdrucks, umfassend einen Getriebesteuerkreis (10) nach einem der Ansprüche 1 bis 4.

## Claims

1. Transmission control circuit (10) for controlling a system pressure provided by a pressure pump (12) in a transmission of a working machine (32), comprising a pressure control valve (14) for setting the provided system pressure to a maximum system pressure (p₀), **characterized in that** the transmission control circuit (10) further comprises an electronic control unit (16), by means of which load states and operating states of the working machine (32) can be detected and in which transmission input torque limits (L_{1,2, ...n}) associated with the load states and state values representing at least one first operating state and state values representing at least one second operating state are stored, wherein the first operating state is associated with the maximum system pressure (p₀) and the second operating state is associated with a reduced system pressure (p_{1, 2, ...n}) compared to the maximum system pressure (p₀), and a pressure limiting valve (18) that can be activated by the control unit (16) to overrule the pressure control valve (14) in order to variably set the reduced system pressure (p_{1,2, ...n}),
wherein activation of the pressure limiting valve (18) is carried out depending on a comparison of a detected load state with a transmission input torque limit (L_{1,2, ...n}) with the simultaneous existence of a second operating state.

2. Transmission control circuit (10) according to Claim 1, wherein the control unit (16) detects a load state using a determined transmission input torque (Mₜᵣₐₙₛ) and electronic activation of the pressure limiting valve (18) is carried out depending on the relationship of the determined transmission input torque (Mₜᵣₐₙₛ) to the transmission input torque limit (L_{1,2, ...n}).

3. Transmission control circuit (10) according to either one of Claims 1 and 2, wherein the pressure limiting valve (18) is configured in such a way that it sets the reduced system pressure by manipulating a spring force of a spring-piston unit of the pressure control valve (14).

4. Transmission control circuit (10) according to Claim 3, wherein the spring-piston unit of the pressure control valve (14) is configured in such a way that a relief point of the provided system pressure in a coolant circuit can be adjusted by manipulation of the spring force.

5. Method for the control of a transmission control circuit (10) according to any of Claims 1 to 4, wherein the electronic activation of the pressure limiting valve (18) for setting the reduced system pressure (p_{1, 2, ...n}) is carried out if the determined transmission input torque (Mₜᵣₐₙₛ) lies below the transmission input torque limit (L_{1,2, ...n}).

6. Method according to Claim 5, wherein the electronic activation of the pressure limiting valve (18) for increasing the reduced system pressure (p_{1,2, ...n}) is carried out if the determined transmission input torque (Mₜᵣₐₙₛ) lies above the transmission input torque limit (L_{1,2, ...n}).

7. Method according to either one of Claims 5 and 6, wherein the transmission input torque (Mₜᵣₐₙₛ) is determined based on a drive torque (M_{eng}) of a drive unit of the working machine.

8. Method according to Claim 7, wherein parasitic loads are included for determining the transmission input torque (Mₜᵣₐₙₛ) from the drive torque (M_{eng}).

9. Method according to any one of Claims 5 to 8, wherein the first operating state is **characterized by** a differential lock of the working machine being in an engaged state or by a state of increased slip within the transmission.

10. Method according to any one of Claims 5 to 8, wherein the second operating state is **characterized by** an unloaded no-load state or a differential lock or power take-off of the working machine being in a disengaged state.

11. Method according to any one of Claims 5 to 10, wherein an existing activation of the pressure limiting valve (18) by the control unit (16) remains unchanged during a transmission shift process.

12. Method according to any one of Claims 5 to 11, wherein in the event of concurrent activation signals by the control unit (16) for the pressure limiting valve (18) the signal corresponding to a higher system pressure is prioritized.

13. Method according to any one of Claims 5 to 12, wherein the maximum system pressure is set in the event of a fault in the transmission control circuit (10) being detected by the control unit (16).

14. Method according to any one of Claims 5 to 13, wherein an increase of the reduced system pressure (p_{1,2, ...n}) is implemented immediately with no time delay if a suitable control criterion exists, whereas the corresponding transmission input torque limit (L_{1,2, ...n}) is multiplied by a hysteresis factor hₓ < 1 if a suitable control criterion exists for setting the reduced system pressure (p_{1,2, ...n}).

15. Method according to Claim 14, wherein the corresponding transmission input torque limit (L_{1,2, ...n}) is additionally set with a time delay t if a corresponding control criterion exists for setting the reduced system pressure (p_{1,2,...n}).

16. Working machine (30) with a drive unit (44) and a transmission (32) with a pressure pump (12) for providing a system pressure, comprising a transmission control circuit (10) according to any one of Claims 1 to 4.

## Revendications

1. Circuit de commande de transmission (10) destiné à commander une pression de système, fournie par une pompe à pression (12), dans une transmission d'une machine de travail (32), ledit circuit comprenant une soupape de réglage de pression (14) destiné à régler la pression de système fournie à une pression de système maximale (p₀) ,
**caractérisé en ce que** le circuit de commande de transmission (10) comprend en outre
une unité de commande électronique (16) qui permet de détecter des états de charge et des états de fonctionnement de la machine de travail (32) et dans laquelle des couples limites d'entrée de transmission (L_{1, 2, ...n}) associés aux états de charge et des valeurs d'état représentant au moins un premier état de fonctionnement et des valeurs d'état représentant au moins un deuxième état de fonctionnement sont stockées, le premier état de fonctionnement étant associé à
la pression de système maximale (p₀) et le deuxième état de fonctionnement étant associé à une pression de système (p_{1, 2, ...n}) réduite par rapport à la pression de système maximale (p₀), et
une soupape de limitation de pression (18) qui peut être commandée par l'unité de commande (16) pour surréguler la soupape de régulation de pression (14) afin de régler de manière variable la pression de système réduite (p_{1, 2, ...n}),
une commande de la soupape de limitation de pression (18) étant effectuée en fonction d'une comparaison d'un état de charge détecté avec un couple limite d'entrée de transmission (L_{1, 2, ...n}) en présence d'un deuxième état de fonctionnement.

2. Circuit de commande de transmission (10) selon la revendication 1, l'unité de commande (16) détectant un état de charge sur la base d'un couple d'entrée de transmission déterminé (Mₜᵣₐₙₛ) et une commande électronique de la soupape de limitation de pression (18) étant effectuée en fonction du rapport du couple d'entrée de transmission déterminé (Mₜᵣₐₙₛ) au couple limite d'entrée de transmission (L_{1, 2, ...n}).

3. Circuit de commande de transmission (10) selon l'une des revendications 1 et 2, la soupape de limitation de pression (18) est conçue de manière à régler la pression de système réduite en manipulant une force de ressort d'une unité à piston et ressort de la soupape de régulation de pression (14).

4. Circuit de commande de transmission (10) selon la revendication 3, l'unité à piston et ressort de la soupape de régulation de pression (14) étant conçue de manière à ce que le point de décharge de la pression de système fournie dans un circuit de refroidissement soit réglable par la manipulation de la force de ressort.

5. Procédé de commande d'un circuit de commande de transmission (10) selon l'une des revendications 1 à 4, la commande électronique de la soupape de limitation de pression (18) est effectuée pour régler la pression de système réduite (p_{1, 2, ...n}) lorsque le couple d'entrée de transmission déterminé (Mₜᵣₐₙₛ) est inférieur au couple limite d'entrée de transmission (L_{1, 2, ...n}).

6. Procédé selon la revendication 5, la commande électronique de la soupape de limitation de pression (18) est effectuée pour augmenter la pression de système réduite (p_{1, 2, ...n}) lorsque le couple d'entrée de transmission déterminé (Mₜᵣₐₙₛ) est supérieur au couple limite d'entrée de transmission (L_{1, 2, ...n}).

7. Procédé selon l'une des revendications 5 et 6, le couple d'entrée de transmission (Mₜᵣₐₙₛ) est déterminé sur la base d'un couple d'entraînement (M_{eng}) d'une unité d'entraînement de la machine de travail.

8. Procédé selon la revendication 7, des charges parasites sont mises en œuvre par le couple d'entraînement (M_{eng}) pour déterminer le couple d'entrée de transmission (Mₜᵣₐₙₛ).

9. Procédé selon l'une des revendications 5 à 8, le premier état de fonctionnement étant **caractérisé par** un blocage différentiel, placé dans un état activé, de la machine de travail ou par un état de glissement accru dans la transmission.

10. Procédé selon l'une des revendications 5 à 8, le deuxième état de fonctionnement étant **caractérisé par** un état à vide sans charge ou par un blocage différentiel ou une prise de force, placé dans un état désactivé, de la machine de travail.

11. Procédé selon l'une des revendications 5 à 10, une commande existante de la soupape de limitation de pression (18), effectuée par l'unité de commande (16), restant inchangée pendant un processus de commutation de la transmission.

12. Procédé selon l'une des revendications 5 à 11, le signal correspondant à une pression de système plus élevé étant priorisé dans le cas où l'unité de commande (16) délivre des signaux de commande concurrents pour la soupape de limitation de pression (18).

13. Procédé selon l'une des revendications 5 à 12, la pression de système maximale étant réglée en cas de défaut détecté par l'unité de commande (16) dans le circuit de commande de transmission (10).

14. Procédé selon l'une des revendications 5 à 13, une augmentation de la pression de système réduite (p_{1, 2, ...n}) étant effectuée immédiatement sans délai en présence d'un critère de commande correspondant, alors qu'en présence d'un critère de commande correspondant au réglage de la pression de système réduite (p_{1, 2, ...n}) le couple limite d'entrée de transmission correspondant (L_{1, 2, ...n}) est multiplié par un facteur d'hystérésis hₓ < 1.

15. Procédé selon la revendication 14, en présence d'un critère de commande correspondant au réglage de la pression de système réduite (p_{1, 2,...n}) le couple limite d'entrée de transmission correspondant (L_{1, 2,...n}) étant en outre réglé avec une temporisation.

16. Machine de travail (30) comprenant une unité d'entraînement (44) et une transmission (32) pourvue d'une pompe à pression (12) destinée à fournir une pression de système, ladite machine comprenant un circuit de commande de transmission (10) selon l'une des revendications 1 à 4.
